# EUROPÄISCHE PATENTSCHRIFT

(11) **EP 3 954 575 B1**
(45) Veröffentlichungstag und Bekanntmachung des Hinweises auf die Patenterteilung: **01.11.2023**
(21) Anmeldenummer: 21186419.4
(22) Anmeldetag: 19.07.2021
(51) Int. Cl.: B60N 2/06

(54) **FAHRZEUGSITZ**
VEHICLE SEAT
SIÈGE DE VÉHICULE

(30) Priorität: 07.08.2020 DE 102020120854
(43) Veröffentlichungstag der Anmeldung: 16.02.2022
(73) Patentinhaber: MAN Truck & Bus SE, 80995 München (DE)
(72) Erfinder: Schweitzer, Simon Martin Christian, 81245 München (DE); Schropp, Sven, 86316 Friedberg (DE); Gundelsheimer, Wolfram, 85757 Karlsfeld (DE)
(74) Vertreter: v. Bezold & Partner Patentanwälte - PartG mbB

(56) Entgegenhaltungen:
- JP-A- 2005 059 771
- US-A- 5 158 338
- US-A1- 2010 253 123

## Beschreibung

Die Erfindung betrifft einen Fahrzeugsitz, insbesondere einen Kraftfahrzeugsitz, besonders bevorzugt einen Sitz und/oder Beifahrersitz im Führerhaus eines Nutzfahrzeuges, sowie ein Fahrzeug mit einem solchen Fahrzeugsitz.

Aus dem Stand der Technik sind Fahrzeugsitze bekannt, die mittels eines Schienensystems in eine Längsrichtung, üblicherweise die Längsrichtung des Fahrzeugs, verschiebbar sind. Um einen solchen Fahrzeugsitz verschieben zu können, ist üblicherweise unterhalb des Sitzteils, z. B. an der unteren Vorderseite des Fahrzeugsitzes, ein Hebel vorgesehen, der per Hand betätigt und gehalten werden muss, bis der Fahrzeugsitz an seine neue Position verschoben worden ist.

Nachteilig ist dazu jedoch notwendig, dass der Nutzer sich weit herunterbeugen muss, um den Hebel zu betätigen, und in dieser Position verharren muss, bis er den Fahrzeugsitz verschoben hat.

Dies ist insbesondere dann ein Problem, wenn der Nutzer selbst nicht auf dem zu verschiebenden Fahrzeugsitz sitzt, sondern aus einer anderen Position heraus den Fahrzeugsitz verschieben will, z. B. ein Fahrer eines Nutzfahrzeugs, der innerhalb des Fahrerhauses neben dem Beifahrersitz steht und diesen Beifahrersitz in Längsrichtung verschieben will.

Dokument JP 2005 059771 A offenbart einen Fahrzeugsitz mit einem Sitzpolster und einer Sitzlehne. Der Fahrzeugsitz umfasst eine Klappvorrichtung, mit der das Sitzpolster zur Sitzlehne hin hochklappbar ist, und eine Gleitvorrichtung, mit der das Sitzpolster hin und her bewegbar ist. Eine Betätigungseinheit der Klappvorrichtung und eine Betätigungseinheit der Gleitvorrichtung sind an einer Vorderfläche des Sitzpolsters angebracht.

Der Erfindung liegt somit die Aufgabe zu Grunde, einen alternativen und/oder verbesserten Fahrzeugsitz stellen, mit dem Nachteile bekannter Umsetzungen der Fahrzeugsitz-Längsverschiebung vermieden werden können.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem allgemeinen Aspekt der Erfindung wird ein Fahrzeugsitz, vorzugsweise ein Kraftfahrzeugsitz, bereitgestellt. Der Fahrzeugsitz umfasst ein Sitzteil, eine Rückenlehne und eine Längsverstellvorrichtung. Die Längsverstellvorrichtung umfasst mindestens eine Bodenschiene und eine gegenüber dieser Bodenschiene in einer Längsverstellrichtung verschiebbare Sitzschiene, und eine lösbare Verriegelungseinrichtung zum lösbaren Verriegeln der Bodenschiene mit der Sitzschiene. Die Verriegelungseinrichtung weist ein federbelastetes Arretierelement auf, das über ein unterhalb des Sitzteils angeordnetes Handbetätigungselement lösbar ist.

Das Sitzteil ist um eine horizontale erste Schwenkachse zwischen einer horizontalen Normalstellung und einer nicht-horizontalen, vorzugsweise vertikalen, Klappstellung verschwenkbar.

Das Handbetätigungselement ist erfindungsgemäß als ein Seil, vorzugsweise als ein Band, ausgeführt oder über ein Seil, vorzugsweise ein Band, mit dem Arretierelement gekoppelt. Das Seil ist derart am Sitzteil gehaltert und unterhalb des Sitzteils geführt, dass das Lösen des federbelasteten Arretierelements mittels des Handbetätigungselements sowohl in der Normalstellung als auch in der Klappstellung möglich ist.

Vorteilhaft ist es für den Nutzer nicht mehr notwendig, sich weit herunterzubeugen oder in die Knie zu gehen, um den Fahrzeugsitz zu verschieben. Stattdessen kann er das Sitzteil verschwenken und so das Handbetätigungselement aus einer wesentlich komfortableren Position betätigen und den Fahrzeugsitz verschieben. Dabei ist insbesondere denkbar, dass ein Fahrer oder ein anderer Nutzer innerhalb eines Fahrerhauses den Fahrzeugsitz im Stehen verschieben kann.

Zudem ist die Verriegelungseinrichtung bei jeder Stellung des Sitzteils mittels des Handbetätigungselements lösbar. Zieht es also ein Nutzer vor, dass Sitzteil nicht zu verschwenken und in seiner Normalstellung zu belassen, weil er beispielsweise auf dem Fahrzeugsitz sitzt, so ist es weiterhin möglich, das Handbetätigungselement zu betätigen, um die Verriegelungseinrichtung zu lösen und den Fahrzeugsitz zu verschieben.

Ferner vorteilhaft bietet der erfindungsgemäße Fahrzeugsitz eine einfache und effektive mechanische Lösung, mit der Nachteile bekannter Umsetzungen der Fahrzeugsitz-Längsverschiebung vermieden werden können.

Der Begriff "Seil" umfasst hierbei alle denkbaren, biegeschlaffen Mittel, mit denen Zugkräfte übertragen werden können, beispielsweise Band, Seil, Bowdenzug, Draht, Gliederband, Textilband und dergleichen. Das Seil kann aus beliebigen biegeschlaffen Materialien, z. B. einem Kunststoff hergestellt sein. Das Seilmaterial kann ein Kunststoffgewebe, z. B. ein Sicherheitsgurtband, sein.

Die horizontale erste Schwenkachse kann parallel zu einer Rückenlehnenquerachse sein. In einem eingebauten Zustand des Fahrzeugsitzes kann die horizontale erste Schwenkachse vorzugsweise in Querrichtung des Fahrzeugs verlaufen. Die horizontale erste Schwenkachse kann vorzugsweise quer zu einer Blickrichtung eines Fahrers bzw. Mitfahrers in einer normalen Sitzposition auf dem Fahrzeugsitz verlaufen.

Die Ausrichtung der horizontalen Normalstellung und der nicht-horizontalen Klappstellung des Sitzteils bezieht sich z. B. auf eine Sitzfläche des Sitzteils. In der horizontalen Normalstellung ist die Sitzfläche horizontal ausgerichtet, auf der der Fahrer bzw. Mitfahrer die normale Sitzposition einnehmen kann. In der vertikalen Klappstellung ist die Sitzfläche vertikal ausgerichtet.

Die Verriegelungseinrichtung der Längsverstellvorrichtung ist durch ein Lösen des Arretierelements lösbar. Das Lösen des Arretierelements erfolgt durch ein Betätigen des Handbetätigungselements, vorzugsweise durch ein Ziehen eines am Sitzteil angeordneten Ende des Seils. Durch dieses Ziehen des Seils kann das Arretierelement aus einer Normalstellung in eine gelöste Stellung gebracht werden.

Bei Loslassen des Seils kann das Arretierelement durch die Federvorbelastung wieder in seine Normalstellung gebracht werden. Die Federvorbelastung kann durch eine Feder erfolgen, die am Arretierelement angeordnet ist und durch das Lösen des Arretierelements ausgelenkt wird. Wird durch das Loslassen des Seils keine Kraft mehr auf das Arretierelement ausgeübt, so zieht sich die Feder wieder zusammen und bewegt dadurch das Arretierelement zurück in seine Normalstellung, in der die Längsverstellung arretiert ist.

Im Stand der Technik sind bereits zahlreiche Schienensysteme und im Schienenbereich angeordnete lösbare Arretierhebel zur Längsverstellung von Fahrzeugsitzen bekannt, und müssen daher vorliegend nicht näher beschrieben werden. Rein beispielhaft kann das Lösen der Verriegelungsvorrichtung wie folgt erfolgen: Zum einen lässt sich durch Ziehen am Band im vorderen Bereich unterhalb des Sitzteiles über das Arretierelement, z. B. einen Querhebel, die an der Sitzschiene festgelegte Verriegelungseinrichtung aus ihrer Verbindungslage mit der Bodenschiene lösen, indem z. B. Sperrklauen der Verriegelungseinrichtung aus der Zahnreihe der jeweiligen Führungsschiene gegen die Kraft selbst rückstellender Federn ausgehoben werden. Im gelösten Zustand kann die Längsverstellung dann in an sich bekannter Weise entweder durch manuelles Verschieben oder durch einen elektro-motorischen Verstellmechanismus erfolgen.

Die Längsverstellrichtung ist Richtung der Verstellbewegung der Längsverstellvorrichtung. In einem eingebauten Zustand des Fahrzeugsitzes entspricht die Längsverstellrichtung üblicherweise der Längsrichtung des Fahrzeugs. Die horizontale erste Schwenkachse ist vorzugsweise senkrecht zur Längsverstellrichtung angeordnet.

Vorzugsweise ist die Sitzschiene an einer Unterseite des Fahrzeugsitzes unmittelbar oder mittelbar, z. B. über eine Konsole bzw. Unterbau, befestigt. Die Bodenschiene ist im Fahrzeug strukturfest, beispielsweise an einer Bodenstruktur innerhalb eines Fahrerhauses, befestigbar bzw. im eingebauten Zustand befestigt.

Gemäß einer bevorzugten Ausführungsform kann an einer Unterseite des Sitzteils mindestens ein Führungselement, beispielsweise eine Klammer, eine Hülse oder ein Bügel, angeordnet sein, in dem ein Abschnitt des Seils lose angeordnet ist.

Gemäß einer weiteren Ausführungsform kann zur Ausbildung des Handbetätigungselements das Seil an einem Endbereich eine Griffschlaufe oder Knoten ausbilden und/oder aufweisen. Alternativ oder zusätzlich kann an dem Endbereich des Seils ein Griffelement, z. B. ein Griffbügel oder ein Knauf, angeordnet sein. Vorteilhaft ist das Handbetätigungselement somit schnell und einfach greifbar. Gemäß einer besonders bevorzugten Ausführungsform ist das Seil hierbei, wie vorstehend bereits erwähnt, als Band ausgeführt.

Erfindungsgemäß umfasst der Fahrzeugsitz ferner einen Unterbau, auf dem das Sitzteil mittels einer Schwenkverbindung um die horizontale erste Schwenkachse schwenkbar gehaltert ist. Der Unterbau bildet hierbei einen zum Sitzteil hin offenen Hohlraum aus. Die Schwenkverbindung ist beabstandet zu einem Endbereich des Sitzteils, der der Rückenlehne in der horizontalen Normalstellung zugewandt ist, angeordnet, so dass beim Verschwenken des Sitzteils von der horizontalen Normalstellung in dessen Klappstellung dieser Endbereich in den Hohlraum des Unterbaus eintaucht.

Die Schwenkverbindung kann - in Längsverstellrichtung gesehen - an einem mittlere Bereich des Unterbaus angeordnet sein.

Vorteilhaft kann die Position der Schwenkverbindung und/oder des Führungselements so gewählt werden, dass sich die Griffschlaufe in eine für den Nutzer komfortablen Höhe angeordnet ist, wenn sich das Sitzteil in der Klappstellung befindet. Beispielsweise kann durch eine entsprechend gewählte Konfiguration eine Höhe der Griffschlaufe erzielt werden, in der das Handbetätigungselement durch Ziehen an der Griffschlaufe problemlos im Stehen betätigt werden kann.

Erfindungsgemäß ist das Seil über eine erste Umlenkstelle, die an einer Unterseite des Sitzteils angeordnet ist, und/oder über eine zweite Umlenkstelle, die an einer vorderen oberen Kante des Unterbaus angeordnet ist, zum Arretierelement geführt. Die erste Umlenkstelle kann durch ein an einer Unterseite des Sitzteils angeordnetes Führungselement, beispielsweise eine Klammer, eine Hülse oder ein Bügel, in dem ein Abschnitt des Seils lose angeordnet ist, realisiert sein. Die zweite Umlenkstelle kann ein für die Auflage des Seils ausgebildeter Bereich der vorderen oberen Kante des Unterbaus sein. Beispielsweise kann die zweite Umlenkstelle eine abgerundete Kante oder Auflage und/oder ein Führungselement, beispielsweise eine Klammer, eine Hülse oder ein Bügel, aufweisen. Vorteilhaft ist so die Führung des Seils gewährleistet und damit eine Betätigung Handbetätigungselements in jeder Stellung des Sitzteils möglich.

Gemäß einer weiteren Variante kann das Arretierelement als Arretierhebel, vorzugsweise als Querhebel, ausgeführt sein. Das Seil kann um eine Unterseite des Arretierhebel herumgeführt sein, vorzugsweise U-förmig herumgeführt sein. Das Seil kann ferner endseitig am Unterbau befestigt sein. Der Arretierhebel muss somit nicht mit dem Seil verbunden werden, sondern kann innerhalb der U-Form auf dem Seil aufliegen. Wird an dem Seil gezogen, so bewegt sich die U-Form in vertikaler Richtung nach oben und drückt damit den Arretierhebel mit nach oben.

Gemäß einer weiteren Ausführungsform kann der Unterbau eine zum Sitzteil hin offene Kastenform aufweisen. Alternativ oder ergänzend kann eine Breite des Sitzteils in dem Endbereich, der in der horizontalen Normalstellung zwischen der ersten Schwenkachse und der Rückenlehne liegt, kleiner sein als eine Breite des Sitzteils in einem Vorderbereich. Vorzugsweise kann die Breite des Vorderbereichs größer und die Breite des Endbereichs kleiner als eine Breite des Hohlraums des Unterbaus sein.

Vorteilhaft kann der Vorderbereich des Sitzteils in der horizontalen Normalstellung auf dem Unterbau aufliegen und damit eine entsprechende Stabilität der Sitzfläche erzielen, insbesondere wenn sich der Fahrer bzw. Mitfahrer auf den Fahrzeugsitz sitzt. Gleichzeitig kann der Endbereich des Sitzteils beim Verschwenken aus der horizontalen Normalstellung in den Hohlraum des Unterbaus hineintauchen und damit die gewünschte Höhe des Sitzteils und der Griffschlaufe in der Klappstellung erzielen.

Gemäß einer weiteren Ausführungsvariante kann der Fahrzeugsitz ferner eine Arretiervorrichtung zur lösbaren Arretierung des Sitzteils in der Klappstellung umfassen. Die Arretiervorrichtung kann als Klemmvorrichtung ausgeführt sein, aufweisend eine im Unterbau angeordnete Aufnahme und/oder Klemme zur Aufnahme eines oder einer an der Unterseite des Sitzteils angeordneten Klemmteils und/oder Aufnahme. Damit kann das Sitzteil vorteilhaft in seiner Klappstellung gehalten werden, insbesondere während das Handbetätigungselement betätigt - also an dem Seil gezogen - und der Fahrzeugsitz verschoben wird.

Gemäß einer weiteren Ausführungsform kann zur Ausbildung der Arretiervorrichtung im Unterbau die Klemme und/oder Aufnahme so positioniert sein, dass beim Verschwenken des Sitzteils von der horizontalen Normalstellung in dessen Klappstellung der in den Hohlraum eintauchende Endbereich des Sitzteils an der Klemme und/oder Aufnahme arretiert wird, vorzugsweise in dem ein Rohrabschnitt eines Traggestells des Sitzteils an der Klemme und/oder Aufnahme arretiert wird.

Vorteilhaft ist keine zusätzliche Vorrichtung am Sitzteil zu Arretierung notwendig.

Gemäß einer weiteren Ausführungsvariante kann die Rückenlehne neigungsverstellbar am Unterbau gehaltert sein, vorzugsweise mittels eines Beschlagsystems am Unterbau gehaltert sein. Die Rückenlehne kann um eine horizontale zweite Schwenkachse neigungsverstellbar sein. Die horizontale zweite Schwenkachse kann vorzugsweise parallel zur horizontalen ersten Schwenkachse und/oder senkrecht zur Längsverstellrichtung angeordnet sein.

Das Beschlagsystem kann durch aus dem Stand der Technik bekannte Beschlagsysteme ausgebildet sein. Das Beschlagsystem kann beispielsweise zwei Beschläge aufweisen, die entlang der horizontalen zweiten Schwenkachse auf zwei gegenüberliegenden Seiten der Rückenlehne angeordnet sind.

Gemäß einer weiteren Ausführungsform kann der Fahrzeugsitz unterseitig auf einer Dreheinrichtung, vorzugsweise einer drehtellerartigen Dreheinrichtung, gelagert sein, mittels derer der Fahrzeugsitz um eine vertikale Drehachse verschwenkbar ist.

Gemäß einer weiteren Variante kann das Sitzteil einen Sitzpolsterträger und ein auf dem Sitzpolsterträger angeordnetes Sitzpolster umfassen. Alternativ oder ergänzend kann. Die Rückenlehne kann einen Rückenpolsterträger und ein auf dem Rückenpolsterträger angeordnetes Rückenpolster umfassen.

Gemäß einer weiteren Ausführungsform kann der Fahrzeugsitz ein Beifahrersitz für ein Fahrerhaus eines Nutzfahrzeugs sein.

Vorteilhaft kann ein Fahrer einen nicht genutzten Beifahrersitz auf einfache und komfortable Weise verschieben, insbesondere im Stehen innerhalb des Fahrerhauses.

Gemäß einem weiteren allgemeinen Aspekt der Erfindung wird ein Fahrzeug, vorzugsweise ein Nutzfahrzeug, mit einem Fahrzeugsitz wie hierin offenbart bereitgestellt. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

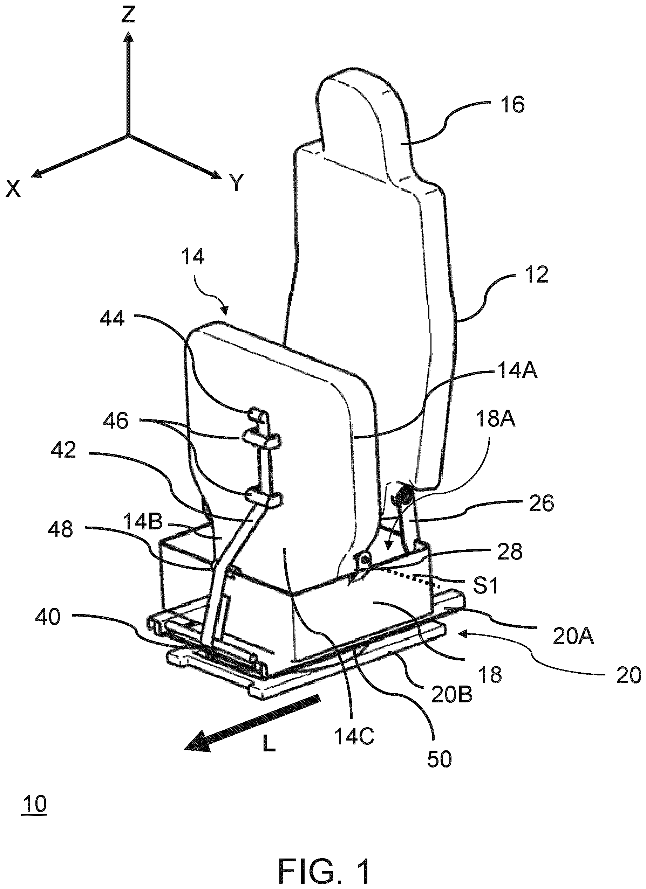

- Figur 1: eine schematische Schrägansicht eines erfindungsgemäßen Fahrzeugsitzes gemäß einer Ausführungsform.

Die in der Figur 1 angegebenen Richtungen beziehen sich auf bevorzugte Fahrzeugrichtungen, wenn sich der Fahrzeugsitz 10 im eingebauten Zustand befindet, nämlich die Fahrzeuglängsrichtung (X-Richtung), die Fahrzeugquerrichtung (Y-Richtung) und die Fahrzeughochrichtung (Z-Richtung).

Der Fahrzeugsitz 10 umfasst ein Sitzteil 14, eine Rückenlehne 12 und eine Längsverstellvorrichtung 20. Die Rückenlehne bildet an ihrem oberen Ende eines Kopfstütze 16 aus.

Das Sitzteil 14 zeichnet sich dadurch aus, dass es um eine horizontale erste Schwenkachse S1 zwischen einer horizontalen Normalstellung und einer nicht-horizontalen Klappstellung verschwenkbar ist. Wie in der Figur gezeigt ist, kann die nicht-horizontale Klappstellung einer vertikalen Klappstellung entsprechen.

Die Längsverstellvorrichtung 20 umfasst mindestens eine Bodenschiene 20B und eine gegenüber dieser Bodenschiene 20B in einer Längsverstellrichtung L verschiebbare Sitzschiene 20A, und eine lösbare Verriegelungseinrichtung zum lösbaren Verriegeln der Bodenschiene 20B mit der Sitzschiene 20A. Die Längsverstellrichtung L entspricht der X-Richtung.

Die Verriegelungseinrichtung weist ein federbelastetes Arretierelement 40 auf, das z. B. als Arretierhebel, vorzugsweise als Querhebel, ausgeführt ist. Dieses Arretierelement 40 ist über ein unterhalb des Sitzteils 14 angeordnetes Handbetätigungselement lösbar, welches als ein Seil 42, hier in Form eines Bandes 42, ausgeführt ist, das mit dem Arretierelement 40 gekoppelt ist. Das Band 42 ist derart am Sitzteil 14 gehaltert und unterhalb des Sitzteils 14 geführt, dass das Lösen des federbelasteten Arretierelements 40 mittels des Bands 42 sowohl in der Normalstellung als auch in der Klappstellung des Sitzteils möglich ist.

An einer Unterseite 14C des Sitzteils 14 sind zwei Führungselemente 46 angeordnet, in dem ein Abschnitt des Bands 42 lose angeordnet ist. Diese Führungselemente 46 können beispielsweise eine Klammer, eine Hülse oder ein Bügel sein. Alternativ können auch nur ein Führungselement 46 oder mehr als zwei Führungselemente 46 vorgesehen sein.

Das Band 42 bildet an seinem Endbereich, der unterhalb des Sitzteils 14 angeordnet ist, eine Griffschlaufe 44 oder Knoten aus, um das Ziehen am Band bzw. das Greifen des Bandes 42 zu erleichtern. Alternativ oder zusätzlich kann hier auch ein Griffelement, z. B. ein Griffbügel oder ein Knauf, am Bandende angeordnet sein.

Gemäß der gezeigten Ausführungsform umfasst der Fahrzeugsitz ferner einen Unterbau 18, auf dem das Sitzteil 14 mittels einer Schwenkverbindung 28 um die erste Schwenkachse S1 schwenkbar gehaltert ist und der einen zum Sitzteil 14 hin offenen Hohlraum 18A ausbildet. Wie zu erkennen ist, ist die Schwenkverbindung 28 beabstandet zu einem Endbereich 14B des Sitzteils 14, der der Rückenlehne 12 in der horizontalen Normalstellung zugewandt ist, angeordnet. Entsprechend kann dieser Endbereich 14B beim Verschwenken des Sitzteils 14 von der horizontalen Normalstellung in dessen Klappstellung in den Hohlraum 18A des Unterbaus 18 eintauchen, wie dies in der Figur 1 gezeigt ist. Die erste Schwenkachse S1 ist vorzugsweise in Y-Richtung ausgerichtet.

Um dieses Eintauchen des Endbereich 14B in den Hohlraum 18A des Unterbaus 18 zu gewährleisten, kann der Unterbau 18 eine zum Sitzteil 14 hin offene Kastenform aufweisen. Ferner kann eine Breite des Sitzteils 14 in dem Endbereich 14B, der in der horizontalen Normalstellung zwischen der ersten Schwenkachse und der Rückenlehne 12 liegt, kleiner sein als eine Breite des Sitzteils 14 in einem Vorderbereich 14A, wobei vorzugsweise die Breite des Vorderbereichs 14A größer und die Breite des Endbereichs 14B kleiner als eine Breite des Hohlraums 18A des Unterbaus 18 ist. Die jeweiligen Breiten beziehen sich hierbei auf die jeweiligen Maße in Y-Richtung.

Ferner kann an der vorderen oberen Kante des Unterbaus 18 eine zweite Umlenkstelle 48, z. B. in Form einer verrundeten Kante, ausgebildet sein, über die das Seil 42 zum Arretierelement 40 geführt wird. Das Seil 42 kann somit über eine erste Umlenkstelle, die an einer Unterseite 14C des Sitzteils 14 angeordnet ist, vorzugsweise das mindestens eine Führungselement 46, und über die zweite Umlenkstelle 48 zum Arretierelement 40 geführt sein. Ist das Arretierelement 40 als Arretierhebel ausgeführt, so kann das Seil 42 um eine Unterseite des Arretierhebel herumgeführt, vorzugsweise - wie in Figur 1 gezeigt - U-förmig herumgeführt, und endseitig am Unterbau 18 befestigt sein. Durch Ziehen der Griffschlaufe 44 wird das Arretierelement 40 nach oben gedrückt und die Verriegelungseinrichtung gelöst. Wird die Griffschlaufe 44 wieder losgelassen, stellt sich das Arretierelement aufgrund der Federvorbelastung wieder in die Ausgangsposition und die Längsverstellvorrichtung 20 wird wieder verriegelt.

Das Sitzteil 14 kann mittels einer Arretiervorrichtung (nicht gezeigt) lösbar in der Klappstellung arretiert werden. Die Arretiervorrichtung kann z. B. als Klemmvorrichtung ausgeführt sein, aufweisend eine im Unterbau 18 angeordnete Aufnahme oder Klemme zur Aufnahme eines oder einer an der Unterseite 14C des Sitzteils 14 angeordneten Klemmteils oder Aufnahme. Dazu kann die Klemme und/oder Aufnahme im Unterbau 18 so positioniert ist, dass beim Verschwenken des Sitzteils 14 von der horizontalen Normalstellung in dessen Klappstellung der in den Hohlraum 18A eintauchende Endbereich 14B des Sitzteils 14 an der Klemme und/oder Aufnahme arretiert wird, vorzugsweise in dem ein Rohrabschnitt eines Traggestells des Sitzteils 14 an der Klemme und/oder Aufnahme arretiert wird.

Ferner kann der Fahrzeugsitz 10 ein Beschlagsystem 26 aufweisen, mit dem die Rückenlehne 12 neigungsverstellbar am Unterbau 18 gehaltert sein kann, und/oder unterseitig auf einer Dreheinrichtung, vorzugsweise einer drehtellerartigen Dreheinrichtung 50, gelagert sein, mittels derer der Fahrzeugsitz 10 um eine vertikale Drehachse verschwenkbar ist.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Fahrzeugsitz
- 12: Rückenlehne
- 14: Sitzteil
- 14A: Vorderbereich des Sitzteils
- 14B: Endbereich des Sitzteils
- 14C: Unterseite des Sitzteils
- 16: Kopfstütze
- 18: Unterbau
- 20: Längsverstellvorrichtung
- 20A: Sitzschiene
- 20B: Bodenschiene
- 26: Beschlagsystem
- 28: Schwenkverbindung
- 40: Arretierelement
- 42: Seil
- 44: Griffschlaufe
- 46: Führungselement
- 48: Zweite Umlenkstelle
- 50: Dreheinrichtung
- S1: Horizontale erste Schwenkachse
- L: Längsverstellrichtung

## Patentansprüche

1. Fahrzeugsitz (10), vorzugsweise Kraftfahrzeugsitz, umfassend:
a) ein Sitzteil (14) und eine Rückenlehne (12);
b) eine Längsverstellvorrichtung (20), umfassend mindestens eine Bodenschiene (20B) und eine gegenüber dieser Bodenschiene (20B) in einer Längsverstellrichtung (L) verschiebbare Sitzschiene (20A), und eine lösbare Verriegelungseinrichtung zum lösbaren Verriegeln der Bodenschiene (20B) mit der Sitzschiene (20A), wobei die Verriegelungseinrichtung ein federbelastetes Arretierelement (40) aufweist, das über ein unterhalb des Sitzteils (14) angeordnetes Handbetätigungselement lösbar ist; und
c) einen Unterbau (18), auf dem das Sitzteil (14) mittels einer Schwenkverbindung (28) um eine horizontale erste Schwenkachse (S1) schwenkbar gehaltert ist und der einen zum Sitzteil (14) hin offenen Hohlraum ausbildet;
wobei
- das Sitzteil (14) um die horizontale erste Schwenkachse (S1) zwischen einer horizontalen Normalstellung und einer nicht-horizontalen, vorzugsweise vertikalen, Klappstellung verschwenkbar ist;
- das Handbetätigungselement als ein Seil (42), vorzugsweise als ein Band, ausgeführt ist oder über ein Seil (42), vorzugsweise ein Band, mit dem Arretierelement (40) gekoppelt ist, wobei das Seil (42) derart am Sitzteil (14) gehaltert und unterhalb des Sitzteils (14) geführt ist, dass das Lösen des federbelasteten Arretierelements (40) mittels des Handbetätigungselements sowohl in der Normalstellung als auch in der Klappstellung möglich ist; und
- die Schwenkverbindung (28) beabstandet zu einem Endbereich (14B) des Sitzteils (14), der der Rückenlehne (12) in der horizontalen Normalstellung zugewandt ist, angeordnet ist, so dass beim Verschwenken des Sitzteils (14) von der horizontalen Normalstellung in dessen Klappstellung dieser Endbereich (14B) in den Hohlraum des Unterbaus (18) eintaucht,
**dadurch gekennzeichnet, dass**
das Seil (42) über eine erste Umlenkstelle, die an einer Unterseite (14C) des Sitzteils (14) angeordnet ist, und/oder über eine zweite Umlenkstelle (48), die an einer vorderen oberen Kante des Unterbaus (18) angeordnet ist, zum Arretierelement (40) geführt ist.

2. Fahrzeugsitz (10) nach Anspruch 1, wobei an einer Unterseite (14C) des Sitzteils (14) mindestens ein Führungselement (46), beispielsweise eine Klammer, eine Hülse oder ein Bügel, angeordnet ist, in dem ein Abschnitt des Seils (42) lose angeordnet ist.

3. Fahrzeugsitz (10) nach Anspruch 1 oder 2, wobei zur Ausbildung des Handbetätigungselements das Seil (42) an einem Endbereich eine Griffschlaufe (44) oder Knoten ausbildet oder an dem Endbereich ein Griffelement, z. B. ein Griffbügel oder ein Knauf, angeordnet ist.

4. Fahrzeugsitz (10) nach einem der vorhergehenden Ansprüche, wobei das Arretierelement (40) als Arretierhebel, vorzugsweise als Querhebel, ausgeführt ist, und wobei das Seil (42) um eine Unterseite des Arretierhebels herumgeführt, vorzugsweise U-förmig herumgeführt ist, und endseitig am Unterbau (18) befestigt ist.

5. Fahrzeugsitz nach einem der einem der vorhergehenden Ansprüche,
a) wobei der Unterbau (18) eine zum Sitzteil (14) hin offene Kastenform aufweist; und/oder
b) wobei eine Breite des Sitzteils (14) in dem Endbereich (14B), der in der horizontalen Normalstellung zwischen der horizontalen ersten Schwenkachse (S1) und der Rückenlehne (12) liegt, kleiner ist als eine Breite des Sitzteils (14) in einem Vorderbereich (14A), wobei vorzugsweise die Breite des Vorderbereichs (14A) größer und die Breite des Endbereichs (14B) kleiner als eine Breite des Hohlraums des Unterbaus (18) ist.

6. Fahrzeugsitz (10) nach einem der vorhergehenden Ansprüche, ferner umfassend eine Arretiervorrichtung zur lösbaren Arretierung des Sitzteils (14) in der Klappstellung, wobei die Arretiervorrichtung als Klemmvorrichtung ausgeführt ist, aufweisend eine im Unterbau (18) angeordnete Aufnahme oder Klemme zur Aufnahme eines oder einer an der Unterseite (14C) des Sitzteils (14) angeordneten Klemmteils oder Aufnahme.

7. Fahrzeugsitz nach Anspruch 6, wobei zur Ausbildung der Arrertiervorrichtung im Unterbau die Klemme und/oder Aufnahme so positioniert ist, dass beim Verschwenken des Sitzteils (14) von der horizontalen Normalstellung in dessen Klappstellung der in den Hohlraum eintauchende Endbereich (14B) des Sitzteils (14) an der Klemme und/oder Aufnahme arretiert wird, vorzugsweise in dem ein Rohrabschnitt eines Traggestells des Sitzteils (14) an der Klemme und/oder Aufnahme arretiert wird.

8. Fahrzeugsitz (10) nach einem der vorhergehenden Ansprüche, wobei
a) die Rückenlehne (12) neigungsverstellbar an dem Unterbau (18) gehaltert ist, vorzugsweise mittels eines Beschlagsystems (26) am Unterbau (18) gehaltert ist; und/oder
b) die Schwenkverbindung (28) - in Längsverstellrichtung L gesehen - an einem mittleren Bereich des Unterbaus (18) angeordnet ist.

9. Fahrzeugsitz (10) nach einem der vorhergehenden Ansprüche, wobei der Fahrzeugsitz (10) unterseitig auf einer Dreheinrichtung, vorzugsweise einer drehtellerartigen Dreheinrichtung (50), gelagert ist, mittels derer der Fahrzeugsitz (10) um eine vertikale Drehachse verschwenkbar ist.

10. Fahrzeugsitz (10) nach einem der vorhergehenden Ansprüche, wobei
a) das Sitzteil (14) einen Sitzpolsterträger und ein auf dem Sitzpolsterträger angeordnetes Sitzpolster umfasst; und/oder
b) die Rückenlehne (12) einen Rückenpolsterträger und ein auf dem Rückenpolsterträger angeordnetes Rückenpolster umfasst.

11. Fahrzeugsitz (10) nach einem der vorhergehenden Ansprüche, wobei der Fahrzeugsitz (10) ein Beifahrersitz für ein Fahrerhaus eines Nutzfahrzeugs ist.

12. Fahrzeug, vorzugsweise Nutzfahrzeug, mit einem Fahrzeugsitz (10) gemäß einem der vorhergehenden Ansprüche.

## Claims

1. A vehicle seat (10), preferably a motor vehicle seat, comprising:
a) a seat part (14) and a backrest (12);
b) a longitudinal adjustment device (20) comprising at least one bottom rail (20B) and a seat rail (20A) displaceable relative to said bottom rail (20B) in a longitudinal adjustment direction (L), and a releasable locking device for releasably locking the bottom rail (20B) to the seat rail (20A), wherein the locking device comprises a spring-loaded locking element (40) which is releasable via a manual actuating element arranged below the seat part (14); and
c) a substructure (18) on which the seat part (14) is supported by means of a swivel connection (28) so as to be pivotable about a horizontal first swivel axis (S1) and which forms a cavity open towards the seat part (14);
where
- the seat part (14) can be pivoted about the horizontal first pivot axis (S1) between a horizontal normal position and a non-horizontal, preferably vertical, folding position;
- the manual actuating element is configured as a cable (42), preferably as a band, or is coupled to the locking element (40) via a cable (42), preferably a band, the cable (42) being held on the seat part (14) and guided below the seat part (14) in such a way that the release of the spring-loaded locking element (40) by means of the manual actuating element is possible both in the normal position and in the folding position; and
- the swivel connection (28) is arranged at a distance from an end region (14B) of the seat part (14), the end region (14B) facing the backrest (12) in the horizontal normal position, so that when the seat part (14) is swivelled from the horizontal normal position into its folding position, this end region (14B) dips into the cavity of the substructure (18),
**characterised in that**
the cable (42) is guided to the locking element (40) via a first deflection point arranged on an underside (14C) of the seat part (14) and/or via a second deflection point (48) arranged on a front upper edge of the substructure (18).

2. Vehicle seat (10) according to claim 1, wherein at least one guide element (46), for example a clip, sleeve or bracket, is arranged on an underside (14C) of the seat part (14), in which a section of the cable (42) is loosely arranged.

3. Vehicle seat (10) according to claim 1 or 2, wherein for forming the hand actuation element the cable (42) forms a handle loop (44) or knots at an end region or a handle element, e.g. a handle bracket or knob, is arranged at the end region.

4. Vehicle seat (10) according to any one of the preceding claims, wherein the locking element (40) is designed as a locking lever, preferably as a transverse lever, and wherein the cable (42) is guided around an underside of the locking lever, preferably in a U-shape, and is fastened at the end to the substructure (18).

5. Vehicle seat according to any one of the preceding claims,
a) wherein the substructure (18) has a box shape open towards the seat part (14); and/or
b) wherein a width of the seat portion (14) in the end portion (14B) which is between the horizontal first pivot axis (S1) and the backrest (12) in the horizontal normal position is smaller than a width of the seat portion (14) in a front portion (14A), preferably the width of the front portion (14A) is larger and the width of the end portion (14B) is smaller than a width of the cavity of the substructure (18).

6. A vehicle seat (10) according to any one of the preceding claims, further comprising a locking device for releasably locking the seat part (14) in the folding position, wherein the locking device is designed as a clamping device, comprising a receptacle or clamp arranged in the substructure (18) for receiving a clamping part or receptacle arranged on the underside (14C) of the seat part (14).

7. Vehicle seat according to claim 6, wherein, in order to form the locking device, in the substructure, the clamp and/or receptacle is positioned in such a way that, when the seat part (14) is pivoted from the horizontal normal position into its folding position, the end region (14B) of the seat part (14) which dips into the cavity is locked on the clamp and/or receptacle, preferably by a tube section of a supporting frame of the seat part (14) being locked on the clamp and/or receptacle.

8. Vehicle seat (10) according to any one of the preceding claims, wherein
a) the backrest (12) is mounted on the substructure (18) so as to be adjustable in inclination, preferably by means of a fitting system (26) on the substructure (18); and/or
b) the swivel connection (28) - viewed in longitudinal adjustment direction L - is arranged at a central region of the substructure (18).

9. Vehicle seat (10) according to any one of the preceding claims, wherein the vehicle seat (10) is mounted on the underside on a rotary device, preferably a turntable-like rotary device (50), by means of which the vehicle seat (10) can be pivoted about a vertical axis of rotation.

10. Vehicle seat (10) according to any one of the preceding claims, wherein
a) the seat member (14) comprises a seat cushion support and a seat cushion disposed on the seat cushion support; and/or
b) the backrest (12) comprises a back cushion support and a back cushion arranged on the back cushion support.

11. A vehicle seat (10) according to any one of the preceding claims, wherein the vehicle seat (10) is a passenger seat for a cab of a commercial vehicle.

12. Vehicle, preferably commercial vehicle, with a vehicle seat (10) according to any one of the preceding claims.

## Revendications

1. Siège de véhicule (10), de préférence siège de véhicule automobile, comprenant :
a) une partie d'assise (14) et un dossier (12) ;
b) un dispositif de réglage longitudinal (20), comprenant au moins un rail de plancher (20B) et un rail de siège (20A) pouvant coulisser par rapport à ce rail de plancher (20B) dans une direction de réglage longitudinal (L), et un appareil de verrouillage amovible pour le verrouillage amovible du rail de plancher (20B) au rail de siège (20A), l'appareil de verrouillage présentant un élément de blocage sollicité par ressort (40) qui peut être détaché par l'intermédiaire d'un élément d'actionnement manuel agencé en dessous de la partie d'assise (14) ; et
c) une base (18), sur laquelle la partie d'assise (14) est maintenue de manière pivotante autour d'un premier axe de pivotement horizontal (S1) au moyen d'une liaison pivotante (28) et qui forme une cavité ouverte vers la partie d'assise (14) ;
- la partie d'assise (14) pouvant pivoter autour du premier axe de pivotement horizontal (S1) entre une position normale horizontale et une position rabattue non horizontale, de préférence verticale ;
- l'élément d'actionnement manuel étant réalisé sous la forme d'un câble (42), de préférence sous la forme d'une bande, ou étant couplé à l'élément de blocage (40) par l'intermédiaire d'un câble (42), de préférence d'une bande, le câble (42) étant maintenu sur la partie d'assise (14) et guidé en dessous de la partie d'assise (14) de telle sorte que le détachement de l'élément de blocage (40) sollicité par ressort est possible au moyen de l'élément d'actionnement manuel aussi bien dans la position normale que dans la position rabattue ; et
- la liaison pivotante (28) étant agencée à distance d'une zone d'extrémité (14B) de la partie d'assise (14) qui fait face au dossier (12) dans la position normale horizontale, de telle sorte que lors du pivotement de la partie d'assise (14) de la position normale horizontale à sa position rabattue, cette zone d'extrémité (14B) plonge dans la cavité de la base (18),
**caractérisé en ce que**
le câble (42) est guidé vers l'élément de blocage (40) par l'intermédiaire d'un premier point de renvoi agencé sur un côté inférieur (14C) de la partie d'assiste (14) et/ou par l'intermédiaire d'un deuxième point de renvoi (48) agencé sur un bord supérieur avant de la base (18).

2. Siège de véhicule (10) selon la revendication 1, dans lequel au moins un élément de guidage (46), par exemple une pince, un douille ou un étrier, est agencé sur un côté inférieur (14C) de la partie d'assise (14), dans lequel une section du câble (42) est agencée de manière lâche.

3. Siège de véhicule (10) selon la revendication 1 ou 2, dans lequel, pour former l'élément d'actionnement manuel, le câble (42) forme une boucle de préhension (44) ou un nœud au niveau d'une zone d'extrémité ou un élément de préhension, par exemple un étrier de préhension ou un pommeau, est agencé au niveau de la zone d'extrémité.

4. Siège de véhicule (10) selon l'une quelconque des revendications précédentes, dans lequel l'élément de blocage (40) est réalisé sous forme de levier de blocage, de préférence sous forme de levier transversal, et dans lequel le câble (42) est enroulé autour d'un côté inférieur du levier de blocage, de préférence est enroulé en forme de U, et est fixé à l'extrémité de la base (18).

5. Siège de véhicule selon l'une quelconque des revendications précédentes,
a) dans lequel la base (18) présente une forme de boîte ouverte vers la partie d'assise (14) ; et/ou
b) dans lequel une largeur de la partie d'assise (14) dans la zone d'extrémité (14B) qui, dans la position normale horizontale, est située entre le premier axe de pivotement horizontal (S1) et le dossier (12), est inférieure à une largeur de la partie d'assise (14) dans une zone avant (14A), de préférence la largeur de la zone avant (14A) étant plus grande et la largeur de la zone d'extrémité (14B) étant plus petite qu'une largeur de la cavité de la base (18).

6. Siège de véhicule (10) selon l'une quelconque des revendications précédentes, comprenant en outre un dispositif de blocage pour le blocage amovible de la partie d'assise (14) dans la position rabattue, le dispositif de blocage étant réalisé sous forme de dispositif de serrage, présentant un logement ou une pince agencé dans la base (18) pour recevoir une partie de serrage ou un logement agencé sur le côté inférieur (14C) de la partie d'assise (14).

7. Siège de véhicule selon la revendication 6, dans lequel, pour former le dispositif de blocage dans la base, la pince et/ou le logement sont positionnés de telle sorte que, lors du pivotement de la partie d'assise (14) de la position normale horizontale à sa position rabattue, la zone d'extrémité (14B) de la partie d'assise (14) qui plonge dans la cavité est bloquée sur la pince et/ou le logement, de préférence en bloquant une section de tube d'un châssis porteur de la partie d'assise (14) sur la pince et/ou le logement.

8. Siège de véhicule (10) selon l'une quelconque des revendications précédentes, dans lequel
a) le dossier (12) est maintenu à la base (18) de manière réglable en inclinaison, de préférence au moyen d'un système de ferrure (26) sur la base (18) ; et/ou
b) la liaison pivotante (28) - vue dans la direction de réglage longitudinal L - est agencée sur une zone centrale de la base (18).

9. Siège de véhicule (10) selon l'une quelconque des revendications précédentes, dans lequel le siège de véhicule (10) est monté sur le côté inférieur sur un appareil rotatif, de préférence un appareil rotatif (50) de type plateau tournant, au moyen duquel le siège de véhicule (10) peut pivoter autour d'un axe de rotation vertical.

10. Siège de véhicule (10) selon l'une quelconque des revendications précédentes, dans lequel
a) la partie d'assise (14) comprend un support de rembourrage de siège et un rembourrage de siège agencé sur le support de rembourrage de siège ; et/ou
b) le dossier (12) comprend un support de rembourrage de dossier et un rembourrage de dossier agencé sur le support de rembourrage de dossier.

11. Siège de véhicule (10) selon l'une quelconque des revendications précédentes, le siège de véhicule (10) étant un siège de passager pour une cabine d'un véhicule utilitaire.

12. Véhicule, de préférence véhicule utilitaire, avec un siège de véhicule (10) selon l'une quelconque des revendications précédentes.
